# EUROPEAN PATENT SPECIFICATION

(11) **EP 0 474 725 B1**
(45) Date of publication and mention of the grant of the patent: **14.08.1996**
(21) Application number: 90908606.8
(22) Date of filing: 01.06.1990
(51) Int. Cl.: G05B 19/042

(54) **PROCESS CONTROL**
VERFAHRENSSTEUERUNG
CONTROLE EN COURS DE FABRICATION

(30) Priority: 01.06.1989 GB 8912599
(43) Date of publication of application: 18.03.1992
(73) Proprietor: FRAY, Paul Jonathan, Cambridge CB3 0EX (GB)
(72) Inventor: FRAY, Paul Jonathan, Cambridge CB3 0EX (GB)
(74) Representative: Brunner, Michael John
(86) International application number: GB9000850
(87) International publication number: WO9015370

(56) References cited:
- EP-A- 0 133 397
- EP-A- 0 251 699
- US-A- 4 449 180
- LE NOUVEL AUTOMATISME. vol. 28, no. 40, September 1983, PARIS FR pages 40 - 41; "MACAO : Une CAO pour l'automaticien" see pages 40 - 41
- Control Engineering 34 (1987) March, No. 3, Newton, MA, USA, pages 92-94, Michael BABB: "Implementing Distributed Control at the Loop Level"

## Description

The present invention relates to the control or automated real-time processes, for example laboratory or manufacturing processes, by a computer or microprocessor.

Automation of, particularly prototype, laboratory or manufacturing processes needs to be as flexible as possible. At the same time, programs for controlling such processes need to be able to be developed quickly, whilst remaining easily modifiable. However, many researchers or process developers do not have the skills necessary to write control programs themselves, so there can be significant delays in developing suitable control programs since it is often necessary to explain the requirements to a programmer who then has to implement the required control strategy in a given programming language.

However, researchers and engineers are generally familiar with so-called timing diagrams or the like in which a representation of the control process is provided by plural graphs, each representing a given control signal or the like, displayed one above the other with the abscissa representing the elapsed time from the start of the process. Real-time process controls are often developed from diagrams of this sort, by the preparation (by a computer programmer) of a computer program implementation of a timing diagram prepared by the system developer, but the need to involve a programmer inevitably slows down the development. Furthermore, modifications that frequently need to be made during development will usually require further input from the programmer.

The present invention sets out to overcome these problems by making use of the timing chart method of describing a real-time process control strategy to develop, automatically, an instruction set for the process control.

*Control Engineering 34 (1987) March pp 92-94,* discloses running a ladder task on a microcomputer and directly executing a set of instructions which periodically scan the designated input channels and activate the associated output channels. EP-A-0 126 123 discloses a means for creating or editing a timing chart of of real time processes on a display device. JP-A-59-158408 discloses the use of a timing chart to create a ladder task for running on a programmable logic controller.

According to the present invention therefore, there is provided apparatus for generating a set of instructions to monitor input signals and produce output signals to govern a real-time process, the apparatus being characterised by
an image display means;
means for creating and/or editing a timing chart, of input/output signals desired to control the real-time process, on the image display means; and
means for selectively converting the chart to a set of instructions for monitoring the input signals and producing the output signals.

The invention also includes apparatus of this type which further includes means for controlling the real-time process by processing the set of instructions to monitor the input signals and produce the output signals in order to govern the real-time process, thereby to control the real-time process.

Further, the invention includes a method of controlling a real-time process, characterised by the steps of
creating and/or editing a timing chart, of input/output signals desired to control the real-time process, on an image display means; and
converting the chart to a set of instructions for monitoring the input signals and producing the output signals.

The method may also include processing the set of instructions to monitor the input signals and produce the output signals to govern the real-time process, thereby to control the real-time process.

Preferably the apparatus of the invention will comprise a computer, the conventional image display means comprising a visual display unit of the computer, and the means for creating and/or editing a timing chart comprises a keyboard and/or computer mouse together with the computer processor when programmed appropriately. The screen representation of the timing chart is a visual representation of a data structure held in memory in the computer.

The instruction set generated by the apparatus is preferably in the form of a computer program which may be saved to a conventional storage medium such as a magnetic disk. Preferably, the program generated is in a high level language such as 'BASIC' so that modification of the program can easily be carried out directly if required, but the program may alternatively be generated in assembler source code, in machine code or in other specific code to be interpreted by a machine or instrument. This enables a program to be generated at one location where the appropriate apparatus (according to the invention) is present, and run on another computer at a separate location, any desired alteration to the control process instructing program being able to be made on the other computer, without the need for the presence of the apparatus of the invention. In other words, the control program may be generated on one computer by use of a program running on it which enables the creation and editing of the timing chart and subsequent control program generation, and can then be run on another computer which does not have the program means for generating the chart etc..

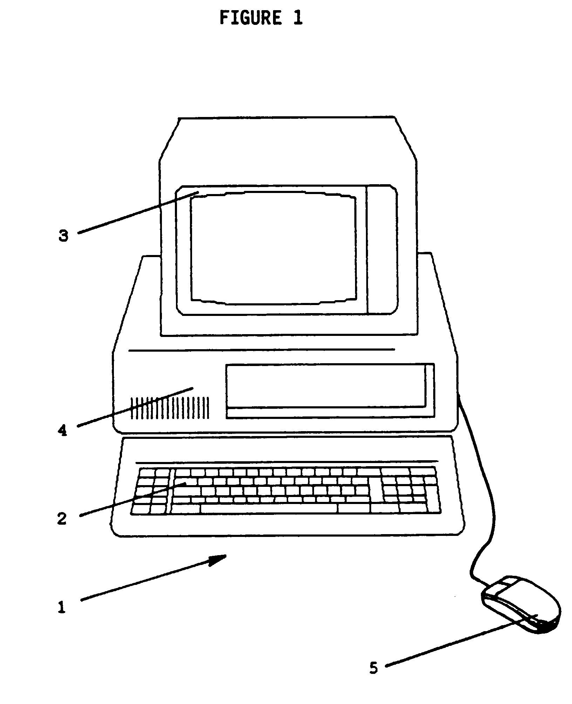

An example of apparatus according to the present invention will now be described with reference to the accompanying drawings, in which:-
Figure 1 is a representation of computer apparatus according to the invention;
Figure 2 is a representation of a visual display unit (VDU) screen of the apparatus showing a timing chart for a first real-time process;
Figure 3 is a representation of a visual display unit (VDU) screen of the apparatus showing a timing chart for a second real-time process; and,
Figure 4 shows an enlargement of a portion of Figure 3 together with details of the associated data structure.

The computer apparatus of this particular example comprises an Acorn Archimedes (registered Trade Mark) personal computer 1 having a keyboard 2, a screen or VDU 3, a central processing unit (CPU) 4, and, optionally, a mouse 5. The CPU also has at least one input/output port (not shown) comprising a plurality of digital input/output lines for connection to process control apparatus in the form of switches, sensors, motors and the like. The inputs/outputs may additionally or alternatively be transmitted/received through a standard serial port such as RS232 or an IEEE488 port in the form of data strings that may be set up within a text window associated with a particular event, or may be analogue signals.

In the particular example the apparatus is shown being used to generate an instruction set for the input/output signals required to control a pelican or similar pedestrian crossing system.

The notation shown on the screen is the visual representation of a data structure that is held in the computer's memory and which, itself, can be used to generate an instruction set for controlling the process. Entry of information on the screen is thus a visual representation of an entry to the underlying data structure in memory form which the screen is updated. The data structure is constructed so as to represent the relationship of causes and effects in time and, when required, is used to generate program code to enable a process to be carried out in accordance with the relationships set up in the data structure and represented on the screen.

The screen 3 displays a timing chart of the various inputs and outputs that are present, inputs having as a prefix the '>' symbol and outputs the '<' symbol, and the signals being, namely, as an input to the pelican crossing system, a button 101, and as outputs thereto, a pedestrian 'WAIT' signal 102, a redman indicator 103, a greenman indicator 104, a warning beeper 105, and red 106, amber 107 and green 108 vehicle signal lights. Each of the signal lines may either be 'on' or 'off', as represented on the chart by the signal representation being respectively high or low. In order to represent a waiting state a shaded horizontal bar (see the button signal 101) is used. The start of a timer is indicated by a solid upwards arrowhead, the duration of the timer by a horizontal line connected thereto, and the end or end and restart by a short vertical bar (see the amber signal 107 at 107'). The cancellation of a timer is represented by an open upwards arrowhead which, when drawn outside the duration of the timer, is joined to the timer line by a dotted line (see the beeper signal 105 at 105'). A dotted vertical bar (eg. 112 on greenman signal 104) represents an instruction to change a switch signal to the state in which it is shown on the chart, in case, as may sometimes happen, it is not in that state already. Thick horizontal bars 109,110,111 indicate recycling processes, in that, when the right hand end of the bar is reached, the process moves immediately to the left hand end of the bar to start again.

Alignment of the signal switches indicates that they occur at the same time of course, but alignment of an input signal switch with output signal switches (see the button 101 signal switch and the 'WAIT' 102, amber 107 and green 108 signals) indicates that the outputs are dependent on the input and that the output switches occur as a result of the input switch. This is one of a number of possible 'cause and effect' relationships that may be selected. There are three possible causes, the start of the process itself (at time 0); switches in shaded inputs (eg button 101 at 101'); and timer ends (eg. amber signal 107 at 107'). Effects are items such as a switch in an output (eg. WAIT signal 102 at 102'); the start of a timer (eg. greenman signal 104 at 104'); cancellation of a timer (eg. beeper signal 105 at 105'); taking notice of a switch (represented by the start of a shaded horizontal bar); ignoring a switch (represented by the end of a shaded horizontal bar); and the start and end of a recycling signal (eg. beeper and amber signals 105, 107 at 109' and 111', recycling of which is indicated by the bars 109 and 111 respectively). Where two causes are aligned, either one or the other can produce an effect.

The screen shows only a portion of the chart and can be scrolled left or right or up or down by use of appropriate keys on the keyboard or the mouse. The keyboard also uses the so-called 'function keys' or mouse to enable editing of the chart to add or change the signal switches, timers etc. and/or the timing, relationships etc. of signal switches, timers etc., and the screen can be expanded in the horizontal direction to give additional detail. The functions of the function keys F1 to F12 when unshifted, when shifted, when pressed with 'CONTROL' and when shifted with the 'CONTROL' key pressed as well are as shown in Tables 1 to 4 below.

The graphical notation used in the apparatus resembles the waveform used in logical analysers and in data sheets for electronic components and the example shows the range of commands for process control that can be used. For example, the amber light 107 is made to flash without regard to when it will stop, and although it is stopped at a particular time, it could be stopped by any one of a number of different events, themselves the result of other causes, unknown to the flashing process.

After the chart has been constructed on the screen to the user's satisfaction CONTROL + F7 is pressed to cause the apparatus to generate, from the data structure represented by the screen display, an instruction set for the pelican crossing control, in the form of a program. This is shown in Listing 1 attached hereto.

**TABLE 1**

| UNSHIFTED KEYS | |
|---|---|
| Key | Function |
| F1 | Help |
| F2 | Load data from disk |
| F3 | Save data to disk |
| F4 | Label a trace with name |
| F5 | Zoom in |
| F6 | Mark a trace for editing |
| F7 | Copy trace |
| F8 | Insert trace |
| F9 | Change trace from low to high |
| F10 | Watch switch (start shading) |
| F11 | Start timer |
| F12 | Start recycle period |

**TABLE 2**

| SHIFTED KEYS | |
|---|---|
| Key | Function |
| F1 | Clear all |
| F2 | Toggle line lables with I/O line nos. |
| F3 | Toggle between input/output type |
| F4 | Assign hardware line |
| F5 | Zoom out |
| F6 | Unmark a trace |
| F7 | Move trace |
| F8 | Display error message |
| F9 | Change trace from high to low |
| F10 | Ignore switch (end shading) |
| F11 | Cancel timer |
| F12 | End recycle period |

**TABLE 3**

| KEYS WITH 'CONTROL' | |
|---|---|
| Key | Function |
| F1 | Use operating system command |
| F2 | Print |
| F3 | Move to relative time |
| F4 | Move to absolute time |
| F5 | Designate start time |
| F6 | Designate end time |
| F7 | Generate control program |
| F8 | Delete trace |
| F9 | Delete switch event |
| F10 | Delete shading event |
| F11 | Delete timer event |
| F12 | Delete recycle event |

**TABLE 4**

| SHIFTED KEYS WITH 'CONTROL' | |
|---|---|
| Key | Function |
| F1 | Quit to Basic |
| F2 | Unused |
| F3 | Unused |
| F4 | Adjust palette |
| F5 | Open/close window |
| F6 | Unused |
| F7 | Run generated control program |
| F8 | Go to event (by trace number & time) |
| F9 | Unused |
| F10 | End & restart timer |
| F11 | Timer end |
| F12 | Toggle to/from recycle zone |

The listing is in BBC BASIC 5 and contains references to procedures (PROCxxxx_yyy) which are not shown in detail, but which are already known for use in the creation of control programs for controlling the I/O lines of ports in an Acorn Archimedes computer. These procedures are given in detail in Listing 2 attached hereto and are described in Appendix 1 hereto.

Using the program generated (Listing 1) the computer can be used to control a pelican crossing or a set of lights and switches representing such a crossing. By saving the program, and if desired translating it into machine code, the program can then be run in situ to control the real-time, real-life process from another computer or microprocessor.

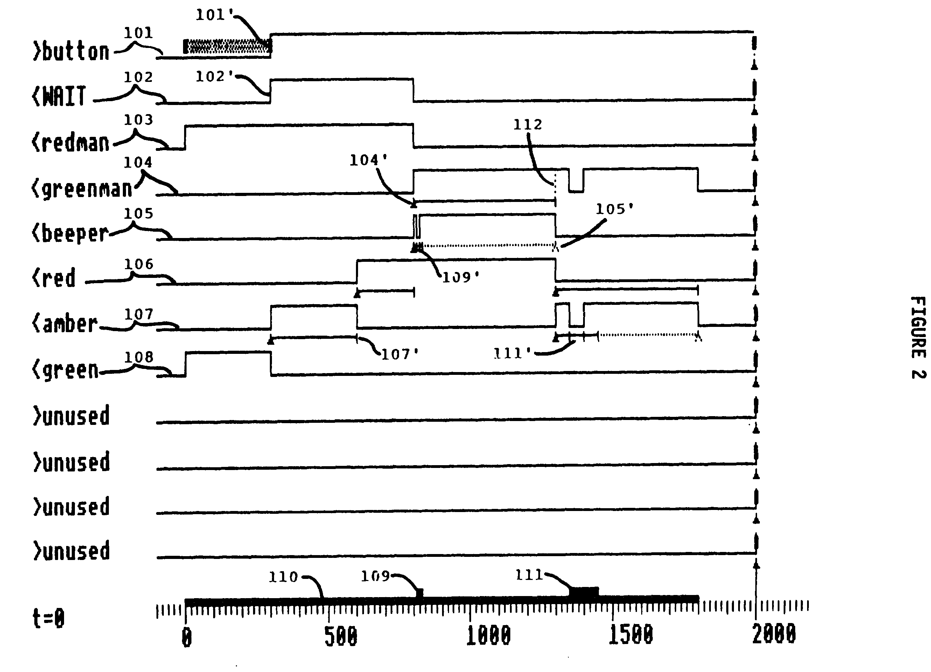

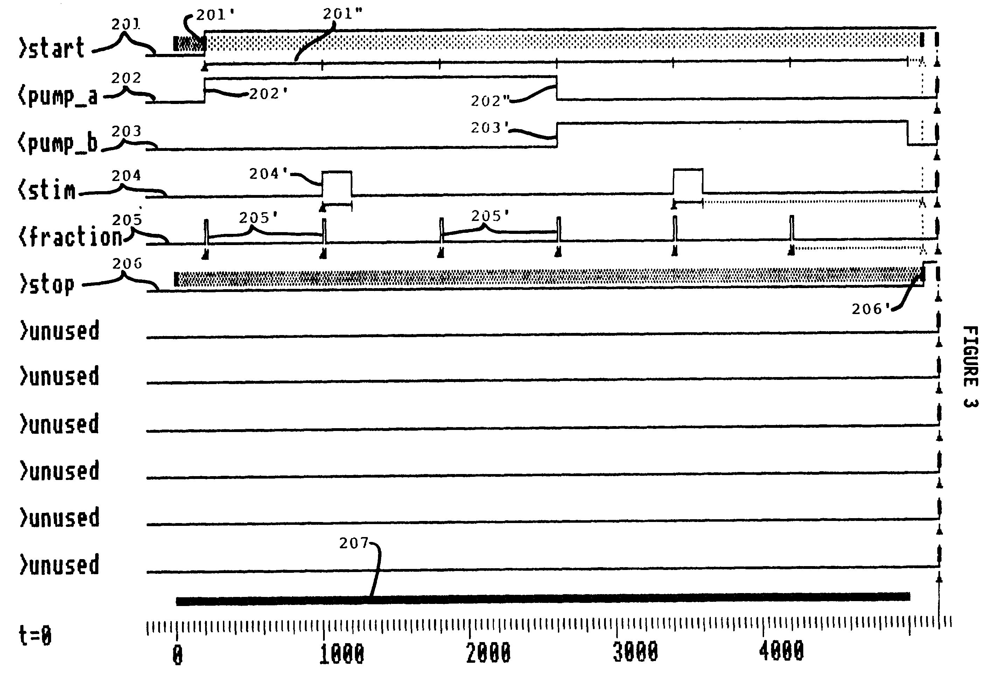

In the example illustrated in Figure 3, the apparatus is shown being used to generate an instruction set for the input/output signals required to control the apparatus for and thus the method of carrying out a tissue perfusion experiment. The screen 3 shows a timing chart similar to that of Figure 2 and identical symbols will not be separately described.

The signals associated with the process are a switch 201, outputs 202,203 for controlling a pair of pumps a and b, an output 'stim' 204 to control a device for electrical stimulation of the tissue, an output 205 to control a fraction-collector, and a stop button 206.

The process defined in Figure 3 is started by the switch 201 at 201' and the time between samples is controlled by a repeating timer 201" on the 'start' signal. This causes pump a to start pumping a first fluid through the tissue sample at 202' and samples are taken by a fraction collector at regular intervals by pulses at 205' which cause perfusate to be moved into fresh collecting tubes. At 203' pump b starts pumping a second fluid and at the same time, at 202" pump a stops pumping. At the beginning of the collection of the central sample of perfusate using both pump a and pump b, the tissue is stimulated briefly by activating the electrical stimulator 204'. A recycle bar 207 (shown at the bottom of the screen) returns control to the switch 201 to await another start and stop button signal 206 can be used at any time to halt the process and cancel all timers. At 201' further activations of the start switch are to be ignored, for the time being, as soon as it is pressed. The lighter shading to the right of 201' indicates that an alternative cause, in this case activation of the stop switch at 206', may result in the start switch being ignored in combination with other effects. The fact that one cause is represented later in time than another does not mean that the one necessarily precedes the other - they are alternatives.

Listing 3 shows the program generated by apparatus from the timing chart of Figure 3.

The notation shown on the screens is the visual representation of a data structure that is held in the computer's memory and which, itself, can be used to generate an instruction set for controlling the process.

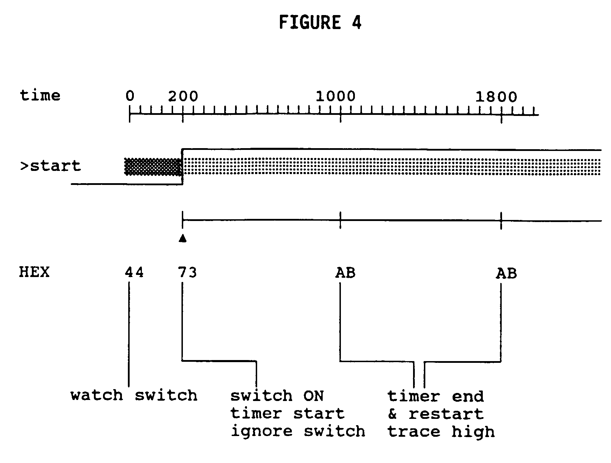

The relationship between the screen shown in Figure 3, the underlying data structure and the program of Listing 3 can be illustrated by reference to Figure 4. Figure 4 illustrates a portion of the 'start' signal line of Figure 3, with the underlying data structure for this part of the screen shown below the trace and an indication of the functions associated with it shown below that. The relative time according to the screen of Figure 3 is shown above the trace line.

Each of the HEXADECIMAL (HEX) bytes shown as comprising the data structure elements in figure 4 is formed of two nybbles each resulting from four binary digits (bits) which indicate the ON or OFF state of given functions. The table below (Table 5) indicates the relationship between these functions and the bits of the two HEX nybbles.

**TABLE 5**

| UPPER NYBBLE | | | | |
|---|---|---|---|---|
| Bit no. | 3 | 2 | 1 | 0 |
| Function | Timer timeout | Watch change | Timer change | Trace change |

| LOWER NYBBLE | | | | |
|---|---|---|---|---|
| Bit no. | 3 | 2 | 1 | 0 |
| Function | spare | Watched/not watched | Timer active/inactive | Trace level |

The table below (Table 6) illustrates for Figure 4 how the HEX bytes result from the bit coding of Table 5.

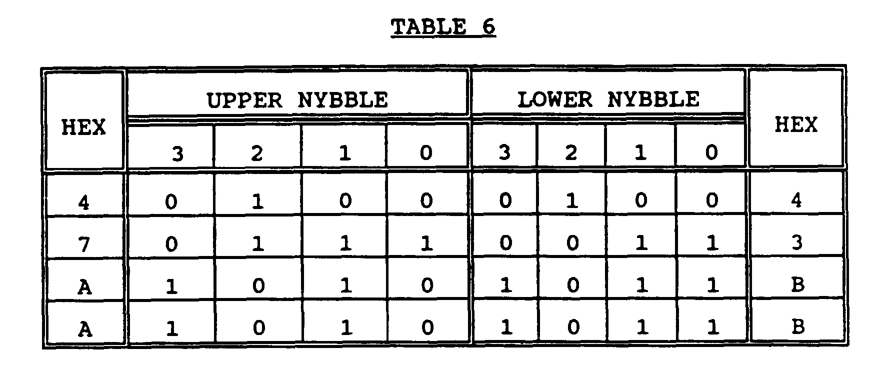

The underlying data structure results in program code being generated (when CONTROL+F7 is pressed) as shown in Listing 3, the relevant portion relating to what is shown in Figure 4 and Tables 5 and 6 being at lines 260 to 380 (these lines also include code generated from other traces/lines of the timing chart of Figure 3 over the same period of time.

The examples show the generation of programs for controlling single processes, but a program may be generated in a form which enables simultaneous control of multiple identical processes or devices.

Although not shown in Figures 2 or 3, for simplicity, any event may have, associated with it, a text window which may contain explanatory data. The window can be accessed, when the cursor is located at the particular event by means of a function key combination assigned to this task. In this example the function key combination used is SHIFT+CONTROL+F5. Such a text window can be used to predefine a number of events of a specified type that must occur to produce a cause, for example the voltage to be produced on an analogue port or the required threshold to generate an analogue cause, a number of times a process is to recycle, or data to be output through for example the serial or IEEE port when the event occurs or the pattern of incoming data expected on the serial or IEEE port.

The system accommodates the occurrence of an event dependent on two causes having occurred in either order of occurrence of the two causes.

### APPENDIX 1

### Defined entities

Several items in the description below appear in triangular brackets, e.g. <sw_num>. These entities are defined here for reference when determining correct syntax.
- <chan_num>: an expression whose integer result is the physical number of an analogue input channel.
- <dac>: an expression whose integer result is the physical number of a digital-to-analogue converter.
- <error>: an error number: the corresponding message is given by FNreport(<error>).
- <expr>: an expression yielding a numeric result.
- <fn_name>: a string expression which gives the name of a a service function.
- <off>: the logical "off" <state>: i.e. drawing no current if govn'd (an output) or negated if free (an input). N.B. The data bit in the I/O chip may be a 0 or a 1, depending on the interface.
- <on>: the logical "on" <state>: i.e. drawing current if govn'd (an output) or asserted if free (an input). N.B. The data bit in the I/O chip may be a 0 or a 1, depending on the interface.
- <parm>: an <expr> whose integer result is stored and passed to a service function when it is called in response to an event.
- <port_num>: an <expr> whose integer result is the physical number of a group of eight consecutive switches ranging from <port_num>*8 to <port_num>*8+7.
- <ret>: a variable to which a procedure or function returns a result.
- <sw_num>: an expression whose integer result is the physical number of a digital I/O line.
- <state>: <on> or <off>.
- <time>: an <expr> whose integer result is a time in centiseconds.
- <t_num>: an <expr> whose integer result is the number of a timer.

### Constants

- On: has the value -1 (TRUE).
- Off: has the value 0 (FALSE).
- Over: has the value 1 (i.e. neither TRUE nor FALSE).

### Pseudo-variables

- FNamax: the highest numbered analogue input channel in the system.
- FNdmax: the highest numbered digital I/O line in the system.
- FNpipes: the number of events currently piped.

### Linking events to service functions

PROCpipe_timer(<t_num>, <time>, <expr>, "FN<fn_name>(", <parm>, <ret>)
- <t_ num>: <expr>: integer result is timer number (0 to 31).
- <time>: <expr>: integer result is a time in centiseconds.
- <expr>: dummy: set to 0.
- "FN<fn_name>(": the name of a service function, optionally followed by extra parameters.
- <parm>: <expr>: evaluated as an integer.
- <ret>: a variable to which an error code will be returned.

PROCpipe_timer() establishes a pipe between a timer and a service function. It sets timer number <t_num> to <time> centiseconds, and it starts counting down immediately. There are 32 timers, numbered 0 to 31.

<parm> is evaluated and saved for use when the timer reaches zero. When this happens, provided that the program has entered PROCwait() (see below), FN<fn_name> is called, and the saved value of <parm> is passed to its formal parameter. <expr> is a dummy for future use: it must be present, and should be set to zero.

If the timer is already piped, the new call supercedes the old one. Timers have only one "life": i.e., once the service function has been executed, the pipe is cancelled and the timer will not restart - if required, this must be done with a further PROCpipe_timer() statement in the service function. A timer can be stopped early and the pipe cancelled by PROCkill_timer() or PROCkill_all (see below).

On exit <ret> is set to zero if the PROC succeeded, and to an <error> if it failed. Possible errors are a non-existent timer, bad function syntax, non-existent function, bad DEFFN statement or the service function returning a non-zero result when probed.

### FNtimer(<t_num>, <ret>)

FNtimer() returns the current value of timer number <t_num>. If the timer is not piped, it returns zero; and if it is piped it returns the time in centiseconds the timer has left to run. If PROCwait() (see below) is late servicing a timer (held up servicing something else), then a negative value is returned, indicating the size of the delay: this is usually very small in practice.

On exit <ret> is set to zero if the FN succeeded, and to an <error> if it failed. The most likely error is trying to read a non-existent timer.

### PRockill_timer(<t_num>, <ret>)

PROCkill_timer() stops timer number <t_num> and cancels the pipe linking it to a service function: the service function is not called. If the timer has not been piped, then nothing happens.

On exit <ret> is set to zero if the PROC succeeded, and to an <error> if it failed. The most likely error is trying to kill a non-existent timer.

### PROCpipe_switch(<sw_num>, <dir>, <expr>, "FN<fn_name>(", <parm>, <ret>)

- <sw_num>: <expr>: integer result is the number of a digital input line.
- <dir>: <expr>: integer result is the direction of change.
- <expr>: dummy: set to 0.
- "FN<fn_name>(": The name of a service function, optionally followed by extra parameters.
- <parm>: <expr>: evaluated as an integer.
- <ret>: a variable to which an error code will be returned.

PROCpipe_switch() establishes a pipe between a free switch (digital input line) and a service function. It specifies that a change of <state> on switch number <sw_num> is to cause service function <fn_name> to be called. (In Issue x0.02, <sw_num> may not be greater than 31: i.e., only switches 0 to 31 may be piped).

The direction of change is given by <dir>: if <dir> is TRUE, a change from <off> to <on> will be effective, but not from <on> to <off>; if <dir> is FALSE, a change from <on> to <off> will be effective, but not from <off> to <on>; if <dir> is any other value, a change of <state> will be effective, regardless of direction.

<parm> is evaluated and saved for use when a change of the specified direction occurs. When this happens, provided that the program has entered PROCwait() (see below), FN<fn_name> is called, and the saved value of <parm> is passed to its formal parameter. <expr> is a dummy for future use: it must be present, and should be set to zero.

If the <sw_num> is already piped, then the new call supercedes the old one. The pipe set up by this PROC remains in force indefinitely: each change of <state> of the specified direction will cause the service function to be called. The pipe can be cancelled with a call to PROCkill_switch() or PROCkill_all (see below). Note that if the switch is govn'd (an output) the PROC will succeed, but the service function will not be called when the switch changes state. On exit <ret> is set to zero if the PROC succeeded, and to an <error> if it failed. Possible errors are a non-existent switch, a switch number greater than 31, bad function syntax, non-existent function, bad DEFFN statement or the service function returning a non-zero result when probed.

### PROCkill_switch(<sw_num>, <ret>)

PROCkill_switch() cancels the pipe between the switch <sw_num> and the service function specified by the most recent call to PROCpipe_switch(). If the switch is not piped, or is a govn'd switch (i.e. a digital input line) then nothing happens.

On exit <ret> is set to zero if the PROC succeeded, and to an <error> if it failed. The most likely error is a non-exitent switch.

### PROCkill_all

PROCkill_all cancels all outstanding pipes for timers and switches. It is usually used at the beginning of a program to ensure that there is nothing left over from an old program, and also it is the way to leave PROCwait() (see below) when terminating a program.

### PROCwait(<ret>)

PROCwait() is called when all the initial pipes for a program have been established. When a piped event occurs (a switch changing to the specified <state> or a timer reaching zero), it is from PROCwait() that the appropriate service function is called.

In addition to manipulating the I/O, service functions may set up new pipes and cancel others before returning: the program will stay in PROCwait() until all pipes have been cancelled. A common way of leaving PROCwait() is for a service function to make a call to PROCkill_all: PROCwait() then finds all pipes cancelled and returns. Service functions usually return zero, to indicate success; but if they return a non-zero result, PROCwait() terminates immediately, returning the value obtained from the service function in <ret>.

On return from PROCwait(), the main program continues from the statement immediately following the PROCwait() statement. Usually, this will signal the end of the program, and it may do some tidying up or print some results before ending. However, it is possible to set up further pipes and call PROCwait() again.

### Direction of digital input/output lines

### PROCfree_switch(<sw_num>, <ret>)

PROCfree_switch() frees the switch number <sw_num> for control by the outside world: i.e. it makes it an input to the computer. On exit <ret> is set to zero if the PROC succeeded, and to an <error> if it failed. The most likely error is specifying a non-existent switch.

### PROCgovn_switch(<sw_num>, <ret>)

PROCgovn_switch() (literally GOVerN SWITCH) takes over the switch number <sw_num> for control by the computer: i.e. it makes it an output. On exit <ret> is set to zero if the PROC succeeded, and to an <error> if it failed. The most likely error is specifying a non-existent switch.

### PROCfree_port(<port_num>, <ret>)

PROCfree_port() frees the eight switches in port number <port_num> for control by the outside world: i.e. it makes them all inputs. On exit <ret> is set to zero if the PROC succeeded, and to an <error> if it failed. The most likely error is specifying a non-existent port.

### PROCgovn_port(<port_num>, <ret>)

PROCgovn_port() (literally GOVerN PORT), takes over the eight switches in in port number <port_num> for control by the computer: i.e. it makes them all outputs. On exit <ret> is set to zero if the PROC succeeded, and to an <error> if it failed. The most likely error is specifying a non-existent port.

### FNstatus(<sw_num>, <ret>)

FNstatus() returns the direction of switch number <sw_num>: the result is FALSE if it is a free switch (an input), and TRUE if it is a govn'd switch (an output). On exit <ret> is set to zero if the FN succeeded, and to an <error> if it failed. The most likely error is specifying a non-existent switch.

### Manipulation of digital I/O lines

### PROCswitch_on(<sw_num>, <ret>)

PROCswitch_on() puts switch number <sw_num> into the <on> state, if it is a govn'd switch (an output). If it is a free switch (an input), or if it is already <on>, then nothing happens. On exit <ret> is set to zero if the PROC succeeded, and to an <error> if it failed. The most likely error is specifying a non-existent switch.

### PROCswitch_off(<sw_num>, <ret>)

PROCswitch_off() puts switch number <sw_num> into the <off> state, if it is a govn'd switch (an output). If it is a free switch (an input), or if it is already <off>, then nothing happens. On exit <ret> is set to zero if the PROC succeeded, and to an <error> if it failed. The most likely error is specifying a non-existent switch.

### PROCswitch_over(<sw_num>, <ret>)

PROCswitch_over() inverts switch number <sw_num>, if it is govn'd (an output); turning it <on> if it was <off>, or turning it <off> it was <on>. If it is a free switch (an input) nothing happens. On exit <ret> is set to zero if the PROC succeeded, and to an <error> it it falled. The most likely error is specifying a non-existent switch.

### PROCswitch(<sw_num>, <expr>, <ret>)

PROCswitch() puts switch number <sw_num> into the <state> specified by <expr>. Unless the switch is free (an input), in which case nothing happens, then the switch is turned <off> if <expr> is zero, and it is turned <on> if <expr> is non-zero.

On exit <ret> is set to zero if the PROC succeeded, and to an <error> if it failed. The most likely error is specifying a non-existent switch.

### FNswitch(<sw_num>, <ret>)

FNswitch() returns the state of switch number <sw_num>: the result is TRUE if the switch is <on>, or FALSE if it is <off>. If the switch is govn'd (an output), the result is the current setting; and if the switch is free (an input), the result is the state at the instant the switch was read.

On exit <ret> is set to zero if the FN succeeded, and to an <error> if it failed. The most likely error is specifying a non-existent switch.

### PROCport(<port_num>, <expr>, <ret>)

PROCport() puts the eight switches within port number <port_num> into the <state> specified by the least significant eight bits if <expr>. For n=0 to 7, if bit n of <expr> is a 1, then switch number <port_num>*8+n is switched <on>; and if bit n of <expr> is a 0, then switch number <port_num>*8+n is switched <off>. If any switch was free (an input) or was already in the <state> specified, nothing happens to it.

On exit <ret> is set to zero if the PROC succeeded, and to an <error> if it failed. The most likely error is specifying a non-existent port.

### FNport(<port_num>, <ret>)

FNport() returns the <state> of the eight switches within port number <port_num> in the least significant eight bits of its result. For n=0 to 7, bit n gives the <state> of switch number <port_num>*8+n: if the switch is <on>; the bit is a 1, and if the switch is <off> the bit is a O. For switches that are govn'd (outputs) the result is the current setting, and for for switches that are free (inputs) the result is the state at the instant the switches were read.

On exit <ret> is set to zero if the FN succeeded, and to an <error> if it failed. The most likely error is specifying a non-existent port.

### Analogue Input and Output

### PROCdac(<dac>, <expr>, <ret>)

PROCdac() sets digital-to-analogue converter number <dac> to the value given by the 12 least significant bits of <expr>, when evaluated as an integer. On exit <ret> is set to zero if the PROC succeeded, and to an <error> if it failed. The most likely error is specifying a non-existent DAC.

### FNadc(<chan_num>, <ret>)

FNadc() performs an analogue-to-digital conversion on analogue input channel number <chan_num>. On exit <ret> is set to zero if the FN succeeded, and to an <error> if it failed. The most likely error is specifying a non-existent channel.

### ARACHNID error messages

### Bad function syntax

The function name given in a PROCpipe_ statement did not have the form:
FN<name>([<parm>,]^

The first two characters must be "FN"; next there must be the name of a function followed by a "("; this may be followed by one or more parameters ending in a ",".

### Can't use SWITCH

The switch number given in a PROCpipe_switch() statement was larger than 31 (the current restriction on pipeable switches).

### No such analogue line

The analogue input channel or the DAC number exceeded the maximum present in the system.

### No such PORT

The port number specified was greater than the maximum present in the system.

### No such SWITCH

The switch number specified was greater than the maximum present in the system.

### No such TIMER

The timer number specified was greater than 31.

### Not a service function

A function was specified as a service function in a PROCpipe_statement, but responded to a probe call with a non-zero result, indicating that the programmer had specified that it was not to be used as a service function.

### ARACHNID Error codes and messages

- 72: No such analogue line
- 91: No such PORT
- 94: No such SWITCH
- 101: No such TIMER
- 103: Can't use SWITCH
- 105: Bad function syntax
- 120: Not a service function

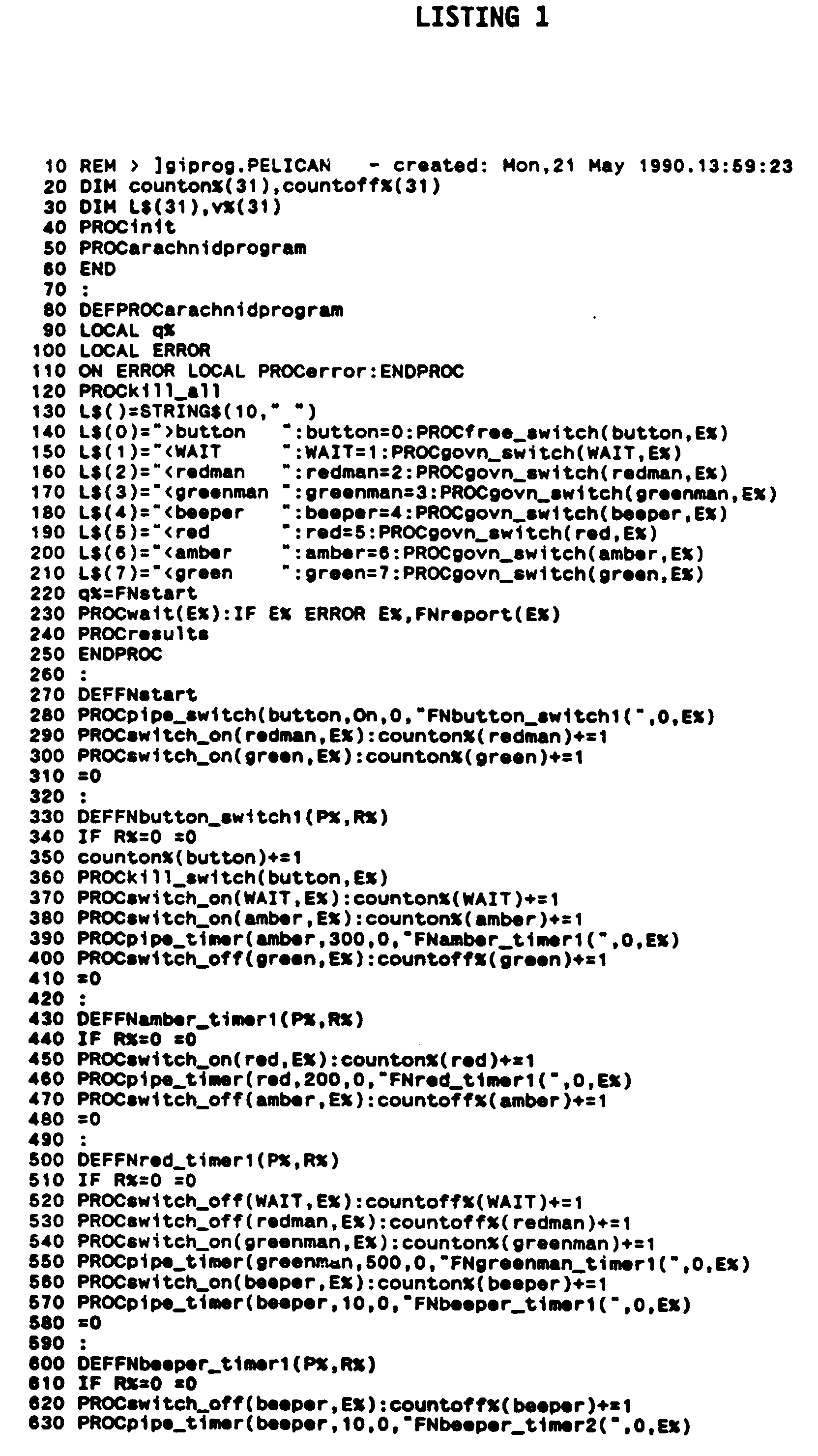

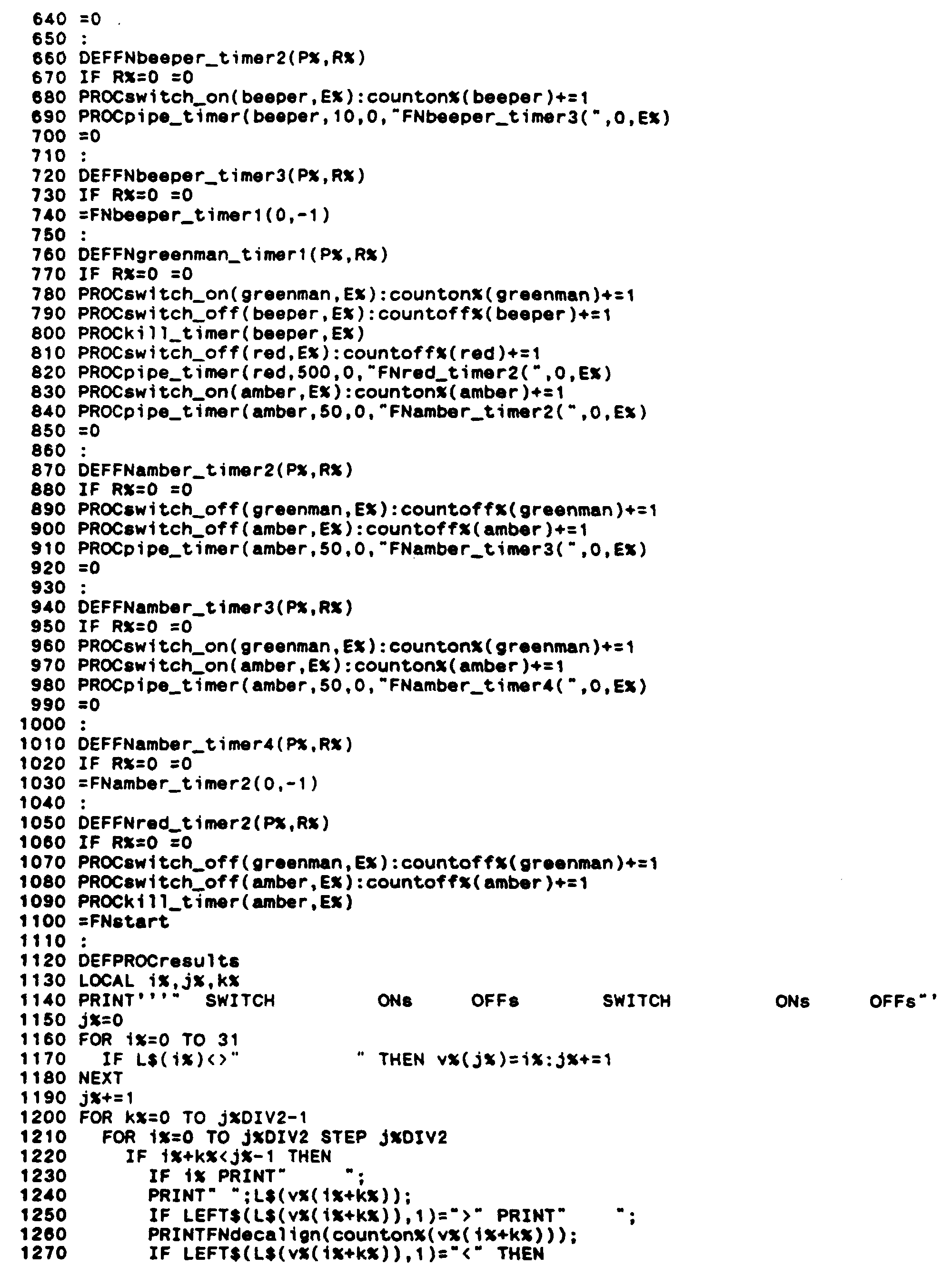

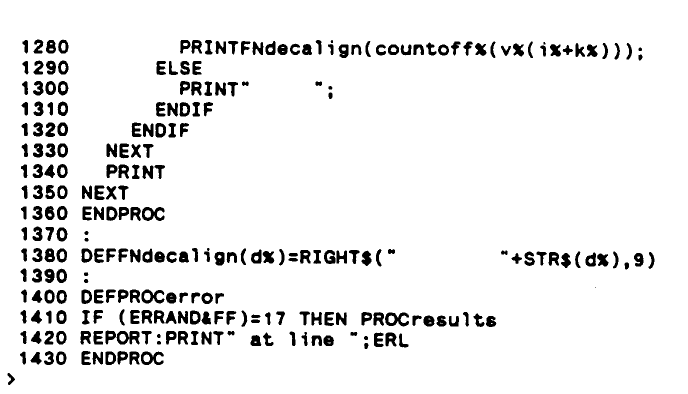

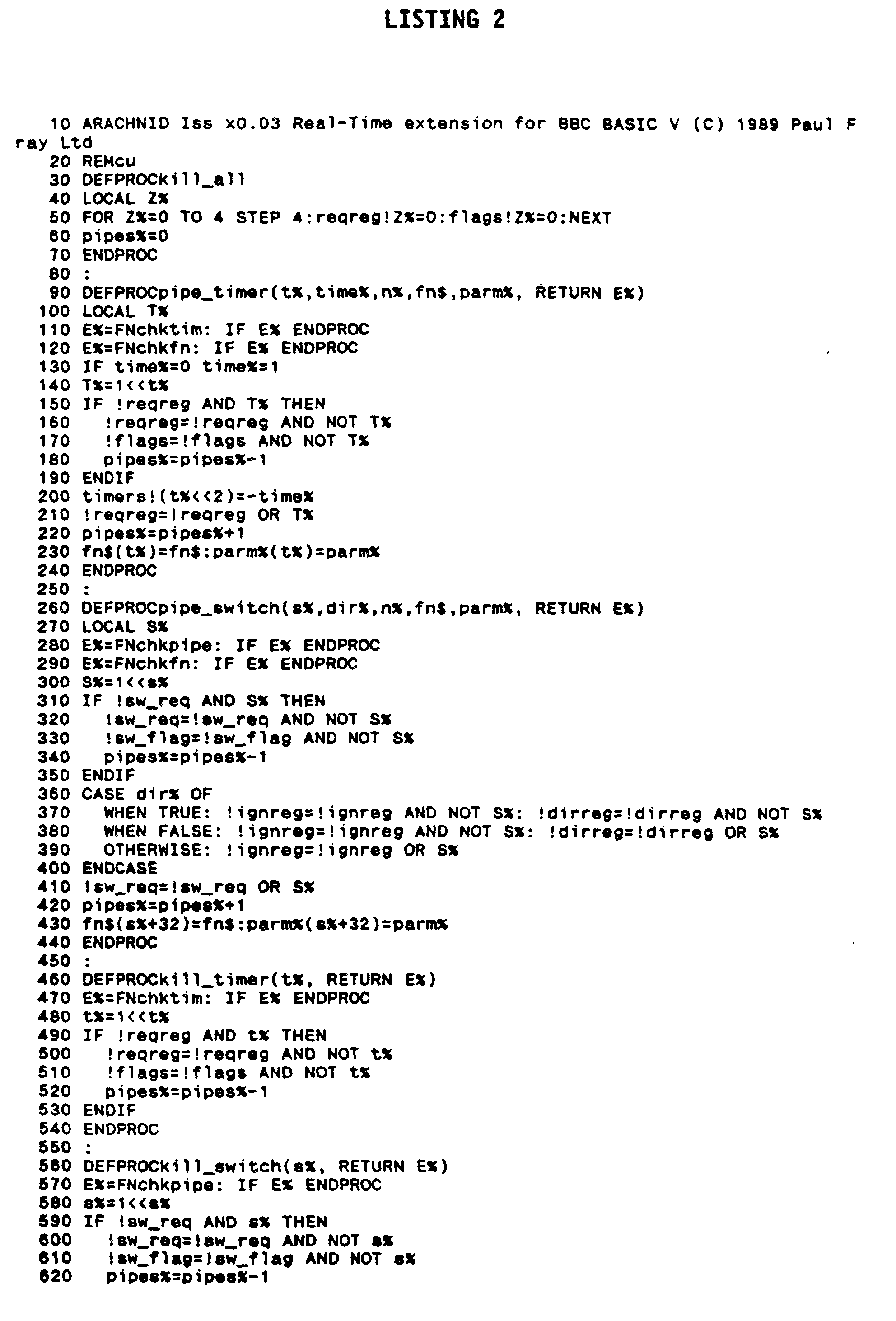

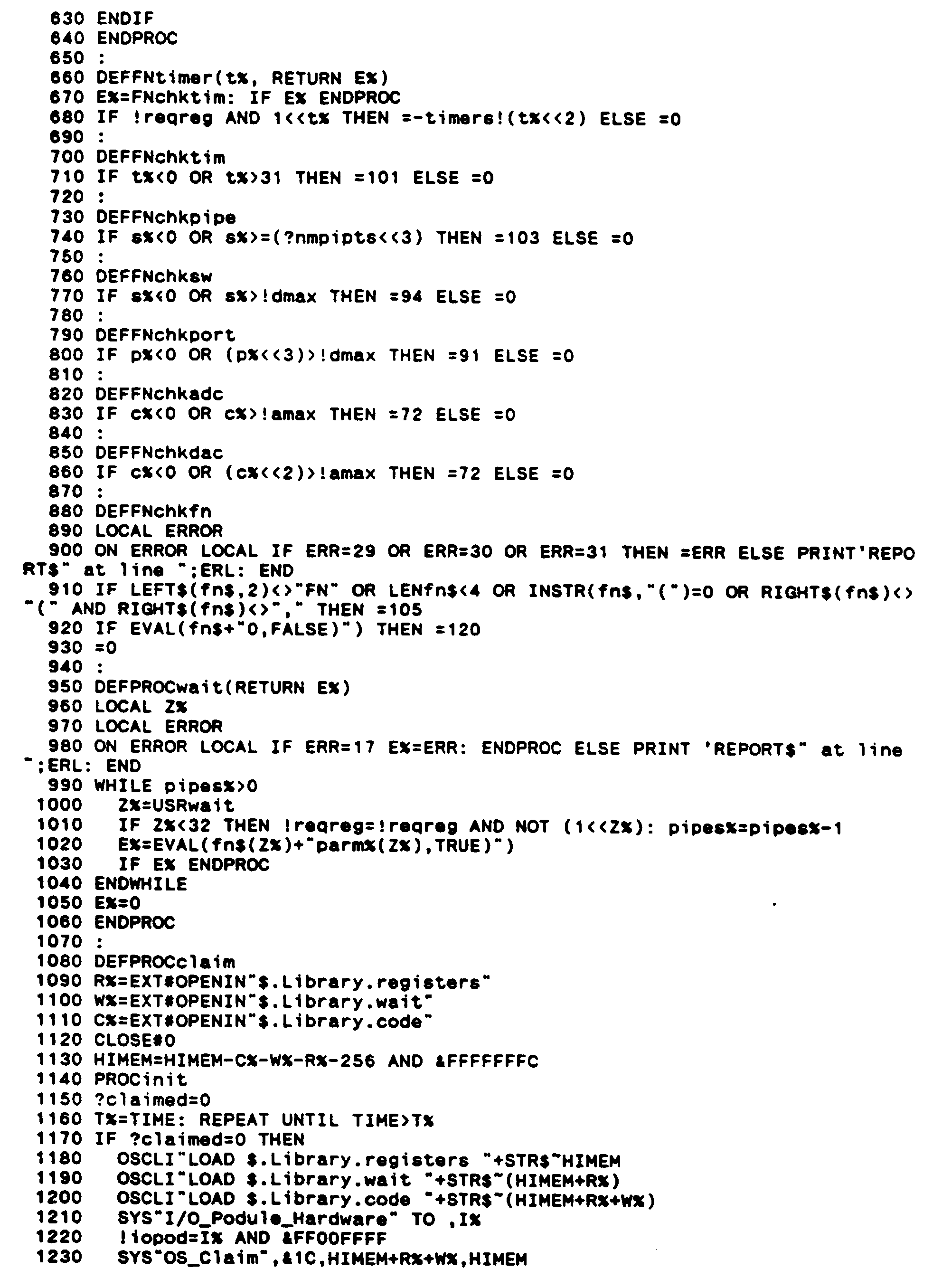

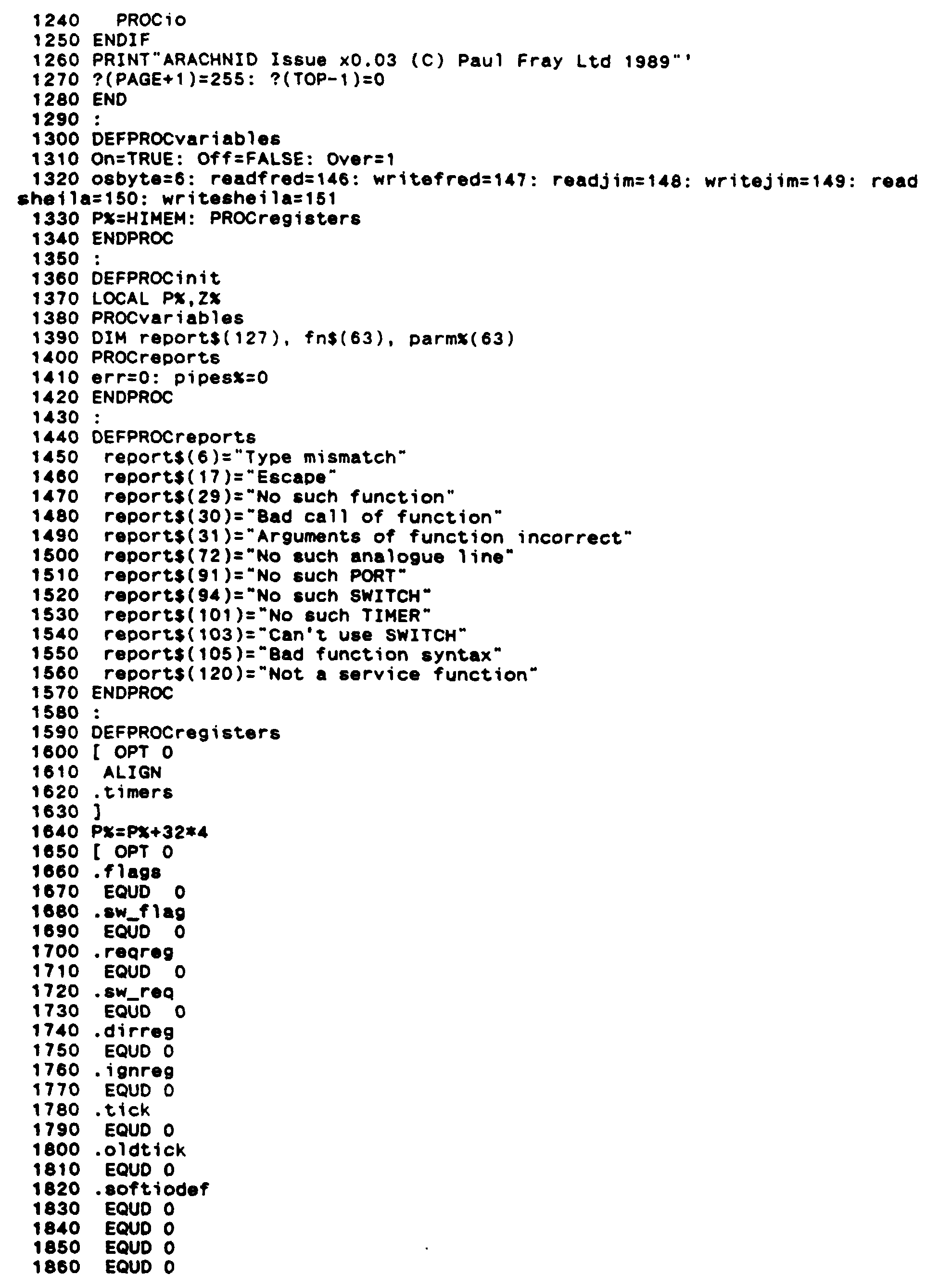

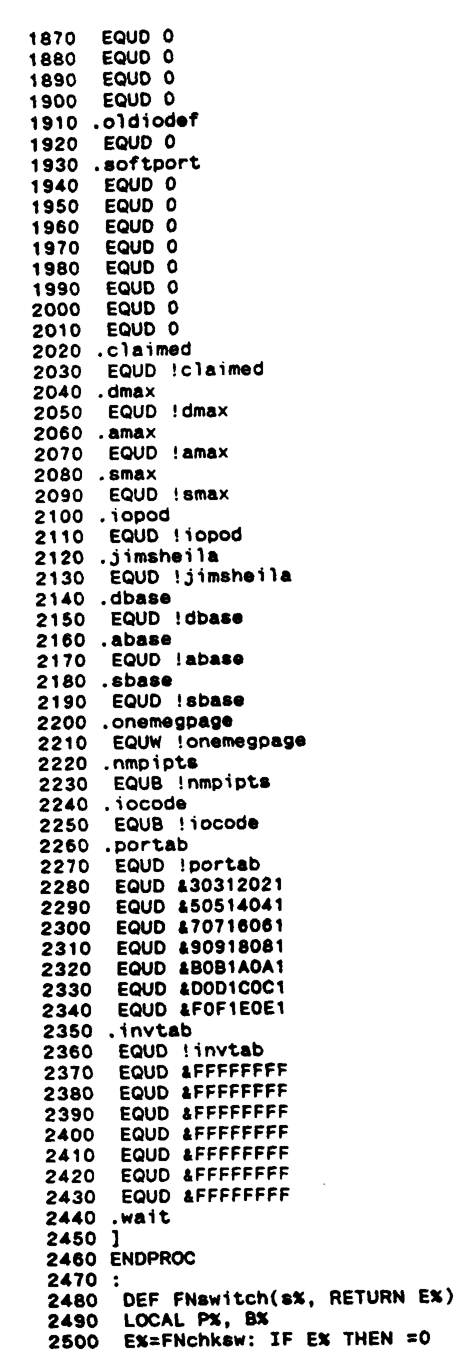

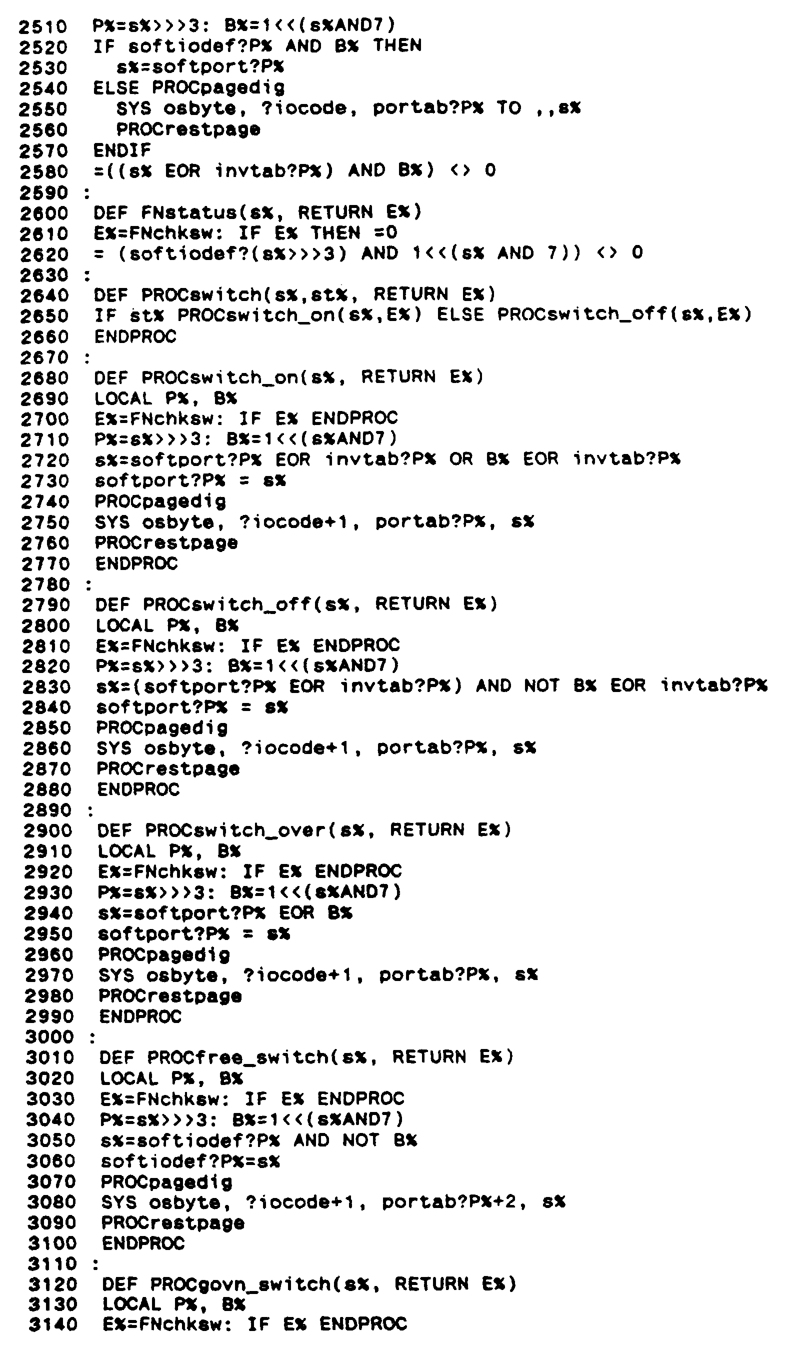

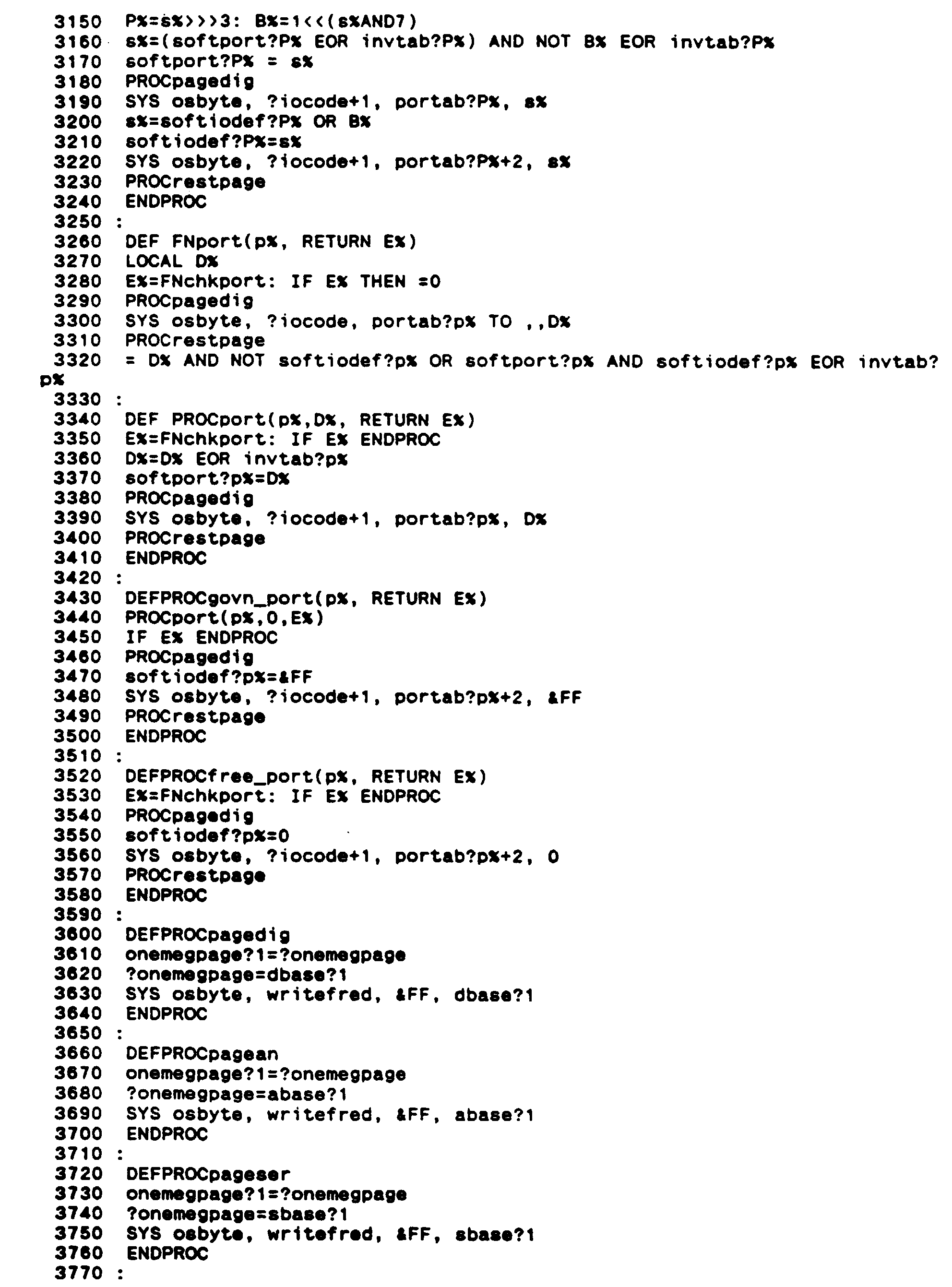

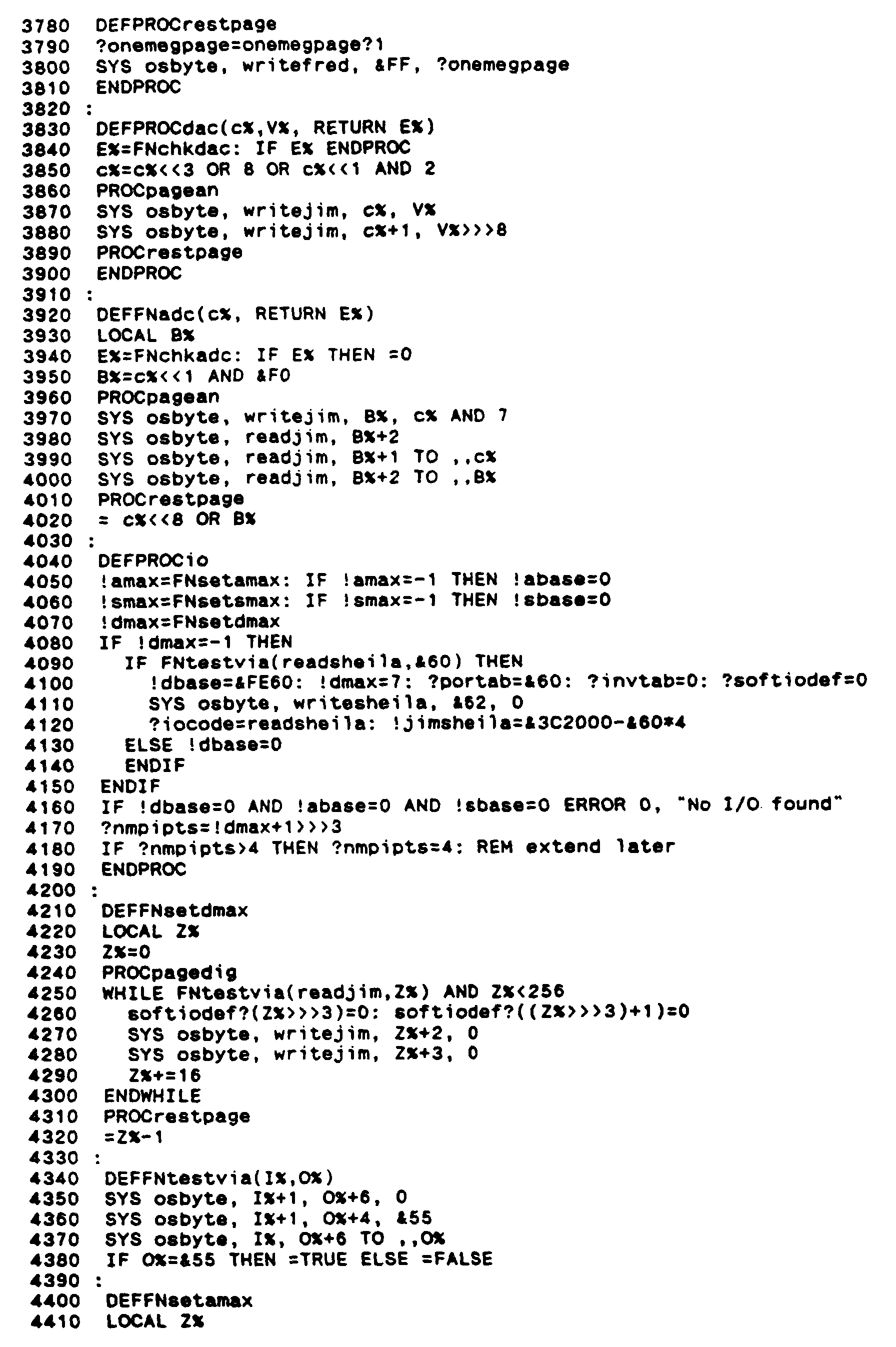

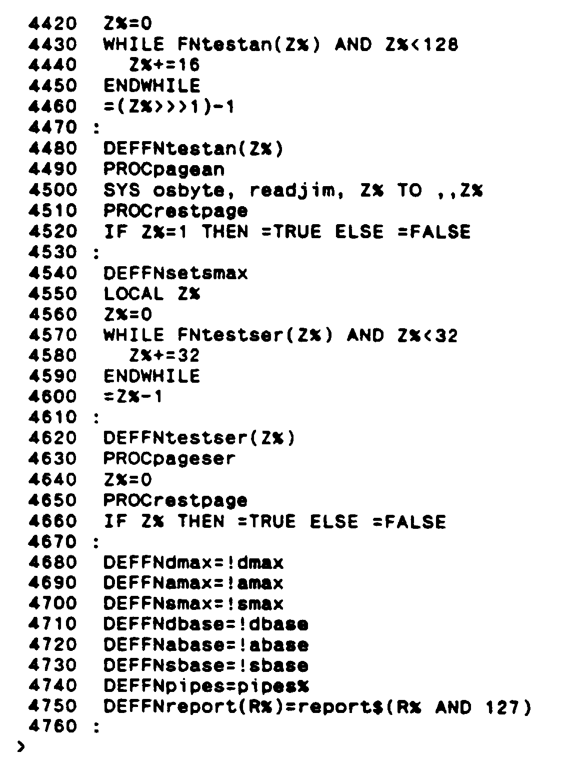

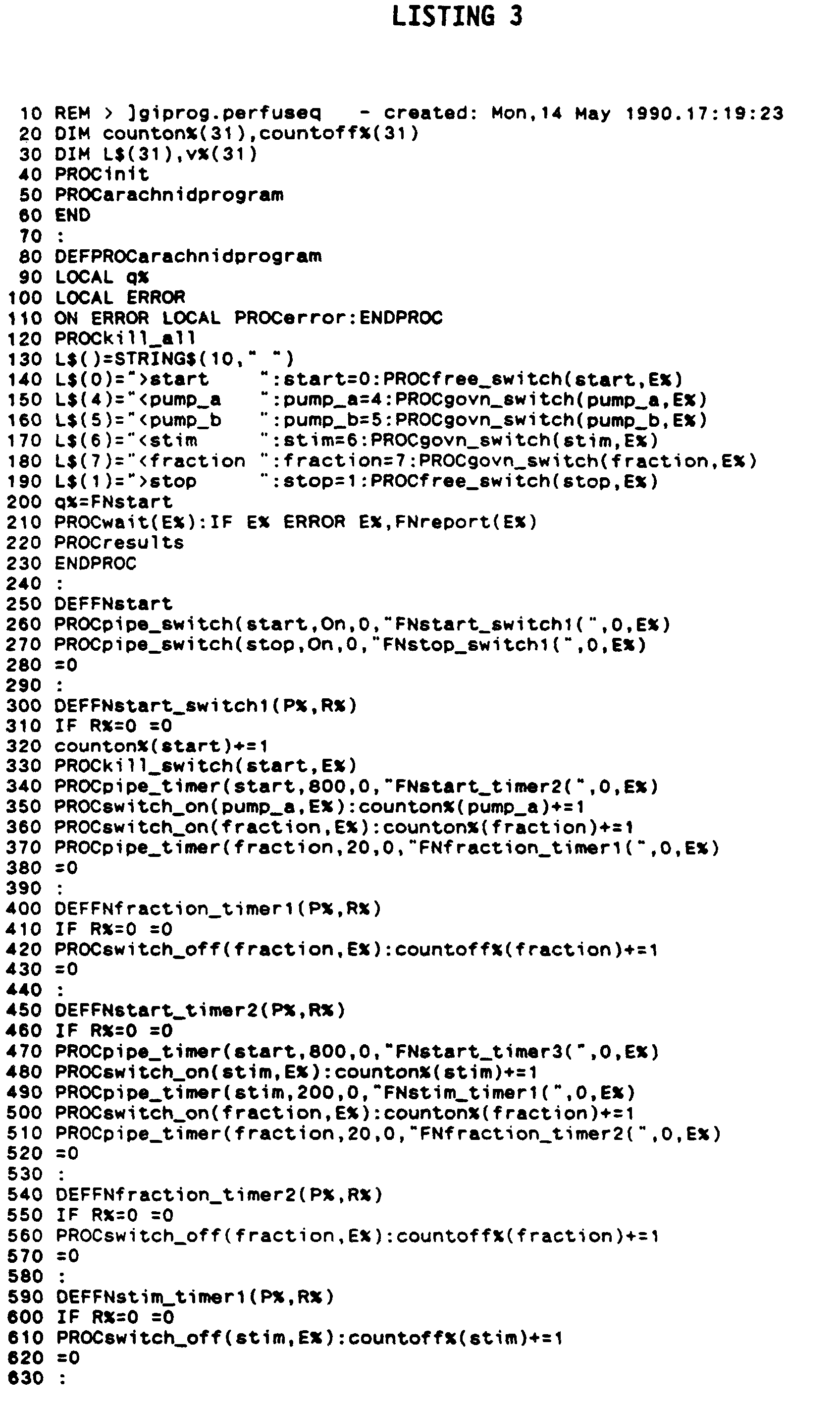

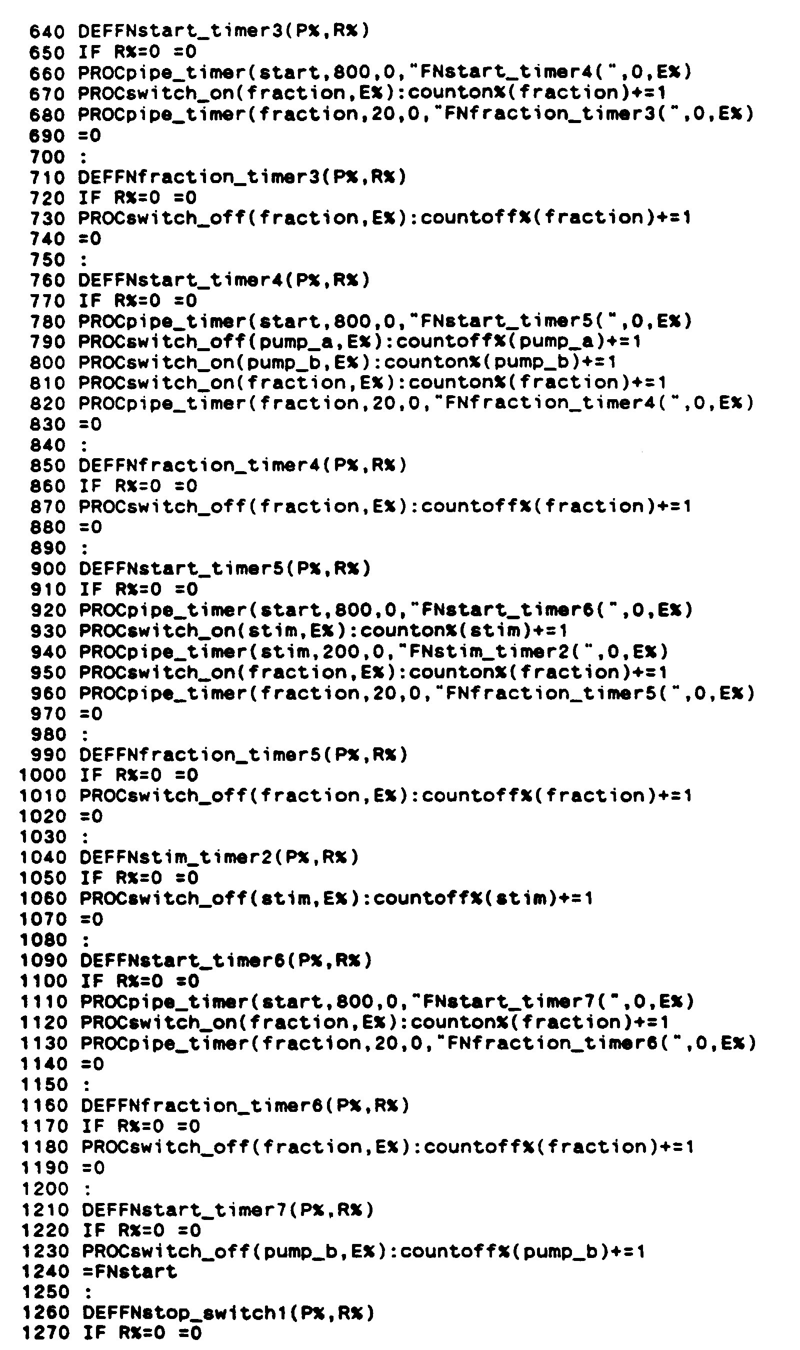

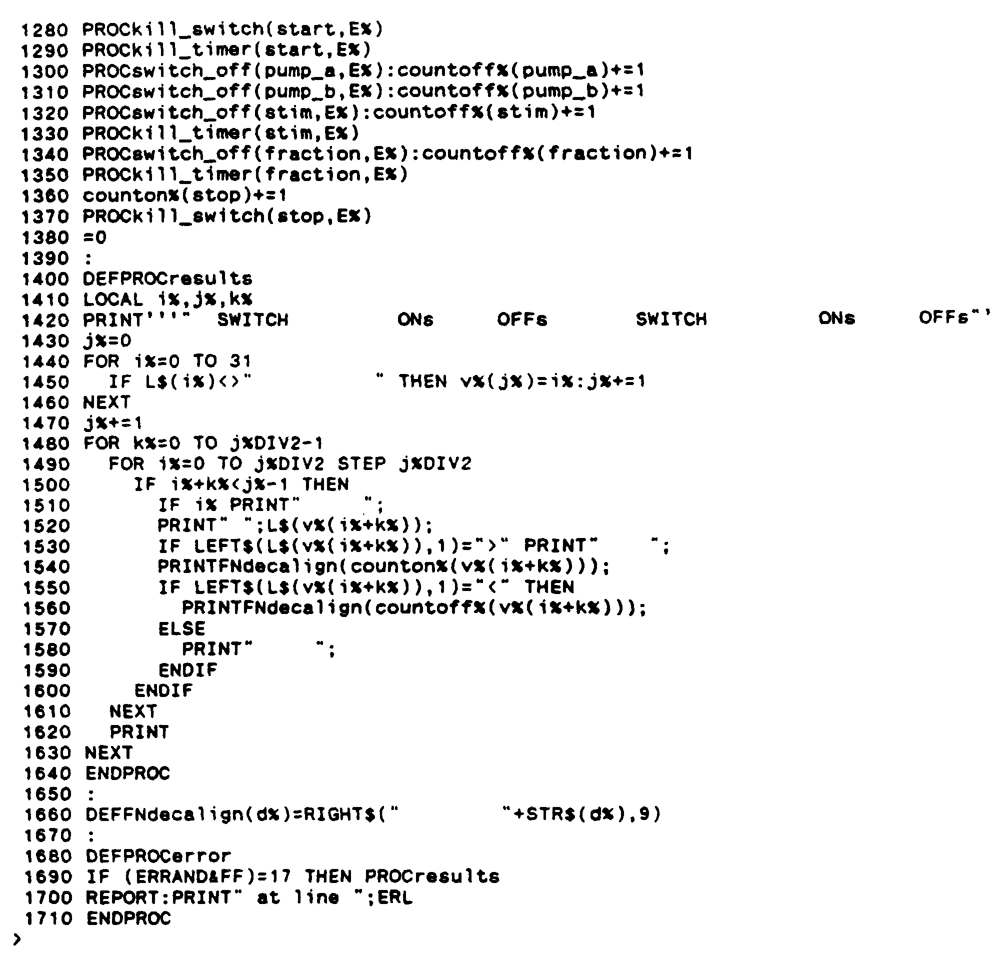

## Claims

1. Apparatus for generating a set of instructions to monitor input signals and produce output signals to govern a real-time process, the apparatus being
characterised by
an image display means (3);
means (2,4,5) for creating and/or editing a timing chart, of input/output signals desired to control the real-time process, on the image display means; and
means (4) for selectively converting the chart to a set of instructions for monitoring the input signals and producing the output signals.

2. An apparatus according to claim 1, wherein the timing chart is a visual representation of a data structure from which the instruction set is generated.

3. Apparatus according to claim 1 or claim 2, including a computer (4), and wherein the image display means comprises a visual display unit (3) of the computer, and the means for creating and/or editing a timing chart comprises a keyboard (2) and/or computer mouse (5) together with the computer processor when programmed appropriately.

4. An apparatus according to any of the preceding claims, wherein the instruction set generated is in the form of a computer program which may be saved to a conventional storage medium such as a magnetic disk.

5. Apparatus for controlling a real-time process, the apparatus comprising:
apparatus according to any of claims 1 to 4; and
means (4) for controlling the real-time process by processing the set of instructions to monitor the input signals and produce the output signals in order to govern the real-time process, thereby to control the real-time process.

6. A method of generating a set of instructions to monitor input signals and produce output signals to govern a real-time process, characterised by the steps of
creating and/or editing a timing chart, of input/output signals desired to control the real-time process, on an image display means (3); and
converting the chart to a set of instructions for monitoring the input signals and producing the output signals.

7. A method of controlling a real-time process, comprising the method of claim 6 together with the step of processing the set of instructions to monitor the input signals and produce the output signals to govern the real-time process, thereby to control the real-time process.

8. A method according to claim 7, wherein the program is generated at one location where the appropriate apparatus is present and run on another computer at a separate location.

## Patentansprüche

1. Vorrichtung zum Erzeugen eines Satzes von Befehlen zum Überwachen von Eingangssignalen und Erzeugen von Ausgangssignalen, um einen Echtzeitprozeß zu leiten, gekennzeichnet durch
Bildanzeigemittel (3);
Mittel (2, 4, 5) zum Erzeugen und/oder Editieren eines Zeitablaufdiagrammes von Eingangs/Ausgangssignalen, die zur Steuerung des Echtzeitprozesses gewünscht sind, auf den Bildanzeigemitteln; und
Mittel (4) zum selektiven Umwandeln des Diagrammes in einen Satz von Befehlen zum Überwachen der Eingangssignale und Erzeugen der Ausgangssignale.

2. Vorrichtung nach Anspruch 1, bei welcher das Zeitablaufdiagramm eine visuelle Darstellung einer Datenstruktur ist, aus der der Befehlssatz erzeugt wird.

3. Vorrichtung nach Anspruch 1 oder 2, mit einem Computer (4), bei welcher die Bildanzeigemittel eine visuelle Anzeigeeinheit (3) des Computers umfassen und die Mittel zum Erzeugen und/oder Editieren eines Zeitablaufdiagrammes eine Tastatur (2) und/oder eine Computermaus (5) zusammen mit dem entsprechend programmierten Computerprozessor umfassen.

4. Vorrichtung nach einem der vorhergehenden Ansprüche, bei welcher der erzeugte Befehlssatz in Form eines Computerprogrammes ist, das auf einem herkömmlichen Speichermedium, wie einer Magnetplatte, gespeichert werden kann.

5. Vorrichtung zum Steuern eines Echtzeitprozesses, mit:
einer Vorrichtung nach einem der Ansprüche 1 bis 4; und
Mitteln (4) zum Steuern des Echtzeitprozesses durch Verarbeiten des Befehlssatzes zwecks Überwachung der Eingangssignale und Erzeugung der Ausgangssignale zur Leitung des Echtzeitprozesses, um dadurch den Echtzeitprozeß zu steuern.

6. Verfahren zum Erzeugen eines Befehlssatzes zur Überwachung von Eingangssignalen und Erzeugung von Ausgangssignalen, um einen Echtzeitprozeß zu leiten, gekennzeichnet durch die Schritte
Erzeugen und/oder Editieren eines Zeitablaufdiagrammes von Eingangs/Ausgangssignalen, die zum Steuern des Echtzeitprozesses gewünscht sind, auf Bildanzeigemitteln (3); und
Umwandeln des Diagrammes in einen Befehlssatz zum Überwachen der Eingangssignale und Erzeugen der Ausgangssignale.

7. Verfahren zum Steuern eines Echtzeitprozesses, umfassend das Verfahren nach Anspruch 6 zusammen mit dem Schritt des Verarbeitens des Befehlssatzes zum Überwachen der Eingangssignale und Erzeugen der Ausgangssignale zur Leitung des Echtzeitprozesses, um dadurch den Echtzeitprozeß zu steuern.

8. Verfahren nach Anspruch 7, bei welchem das Programm an einem Ort erzeugt wird, wo die entsprechende Vorrichtung vorhanden ist, und auf einem anderen Computer an einem gesonderten Ort laufengelassen wird.

## Revendications

1. Appareil pour créer un jeu d'instructions, pour surveiller des signaux d'entrée et produire des signaux de sortie, en vue d'asservir un processus en temps réel, l'appareil étant caractérisé par:
un moyen d'affichage d'images (3);
des moyens (2, 4, 5) pour créer et/ou modifier sur le moyen d'affichage d'images un diagramme de déroulement constitué de signaux d'entrée/sortie que l'on souhaite en vue de contrôler le processus en temps réel; et
un moyen (4) pour transformer sélectivement le diagramme en un jeu d'instructions destiné à surveiller les signaux d'entrée et à produire les signaux de sortie.

2. Appareil selon la revendication 1, dans lequel le diagramme de déroulement est une représentation visuelle d'une structure de données à partir de laquelle le jeu d'instructions est créé.

3. Appareil selon la revendication 1 ou la revendication 2, comprenant un ordinateur (4), et dans lequel le moyen d'affichage d'images comprend une unité d'affichage visuel (3) de l'ordinateur, et le moyen pour créer et/ou modifier un diagramme de déroulement comprend un clavier (2) et/ou une souris d'ordinateur (5), en même temps que le processeur de l'ordinateur lorsqu'il est programmé de manière appropriée.

4. Appareil selon l'une quelconque des revendications précédentes, dans lequel le jeu d'instructions créé présente la forme d'un programme informatique qui peut être sauvegardé sur un support d'enregistrement classique tel qu'un disque magnétique.

5. Appareil pour contrôler un processus en temps réel, l'appareil comprenant:
un appareil selon l'une quelconque des revendications 1 à 4; et
un moyen (4) pour contrôler le processus en temps réel en traitant le jeu d'instructions pour surveiller les signaux d'entrée et produire les signaux de sortie, en vue d'asservir le processus en temps réel, pour ainsi contrôler le processus en temps réel.

6. Processus de création d'un jeu d'instructions en vue de surveiller des signaux d'entrée et de produire des signaux de sortie, pour asservir un processus en temps réel, caractérisé par les étapes consistant à:
créer et/ou modifier sur un moyen d'affichage d'images (3) un diagramme de déroulement constitué de signaux d'entrée/sortie que l'on souhaite en vue de contrôler le processus en temps réel; et
transformer le diagramme en un jeu d'instructions en vue de surveiller les signaux d'entrée et de produire les signaux de sortie.

7. Procédé pour contrôler un processus en temps réel, comprenant le processus de la revendication 6 ainsi que l'étape consistant à traiter le jeu d'instructions pour surveiller les signaux d'entrée et produire les signaux de sortie, pour asservir le processus en temps réel, et ainsi contrôler le processus en temps réel.

8. Procédé selon la revendication 7, dans lequel le programme est créé en un emplacement où se trouve l'appareil approprié, et est exécuté sur un autre ordinateur en un emplacement distinct.
